# EUROPÄISCHE PATENTSCHRIFT

(11) **EP 2 571 708 B1**
(45) Veröffentlichungstag und Bekanntmachung des Hinweises auf die Patenterteilung: **28.05.2014**
(21) Anmeldenummer: 11711578.2
(22) Anmeldetag: 01.04.2011
(51) Int. Cl.: B60K 7/00

(54) **RADANTRIEB FÜR EIN FAHRZEUG**
WHEEL DRIVE FOR A VEHICLE
ENTRAÎNEMENT DE ROUE POUR UN VÉHICULE

(30) Priorität: 18.05.2010 DE 102010029071
(43) Veröffentlichungstag der Anmeldung: 27.03.2013
(73) Patentinhaber: Bayerische Motoren Werke Aktiengesellschaft, 80809 München (DE)
(72) Erfinder: DAUN, Nico, 80639 München (DE); WEIGL, Erwin, 86807 Buchloe (DE)
(86) Internationale Anmeldenummer: PCT/EP2011/055083
(87) Internationale Veröffentlichungsnummer: WO 2011/144380

(56) Entgegenhaltungen:
- DE-A1- 2 231 207
- DE-A1-102009 003 388
- DE-C1- 4 421 425
- JP-A- 2005 324 606

## Beschreibung

Die Erfindung betrifft einen Radantrieb zum Antreiben eines Rades eines Fahrzeugs, mit einem elektrischen Antriebsmotor zum Erzeugen eines Antriebsmoments, einem Getriebe zum Erhöhen des Antriebsmoments und einer Gelenkwelle mit mindestens einem Gelenk zum Übertragen des erhöhten Antriebsmoments auf das Rad.

Es sind verschiedene Ansätze zum Anordnen eines Elektromotors an einer Achse eines Fahrzeugs bekannt. So ist es bekannt den elektrischen Antriebsmotor direkt an einer Radnabe der Achse anzubringen. Nachteilig bei dieser Anordnung ist der dort nur beschränkt vorhandene Bauraum der die maximal installierbare Leistung des Elektromotors begrenzt.

Aus DE 10 2009 003 388 A1 ist ein Antriebsstrang für ein Fahrzeug mit mehreren Energiequellen einschließlich eines elektrischen Motors zum Antreiben eines Satzes Fahrzeugräder bekannt. Der Motor ist zusammen mit dem zugehörigen Getriebe zwischen den beiden Antriebswellen der Fahrzeugräder angeordnet. Bei dieser Gestaltung sind die Bauteile zwischen dem Satz Fahrzeugräder eher ausladend angeordnet. Weitere Bauteile, wie z.B. ein Energiespeicher kann nur schwer zusätzlich angeordnet werden.

Ein gattungsgemäße Radantrieb ist aus DE 2 231 207 bekannt.

Der Erfindung liegt die Aufgabe zugrunde einen Radantrieb zum Antreiben eines Rades eines Fahrzeugs zu schaffen, bei dem oben genannte Probleme überwunden sind und der durch eine kompakte Bauweise möglichst viel Bauraum im Achsbereich freihält.

Die Aufgabe ist erfindungsgemäß mit einem Radantrieb zum Antreiben eines Rades eines Fahrzeugs gemäß Anspruch 1 gelöst. Ferner ist die Aufgabe mit einem Fahrzeug mit mindestens einem solchen Radantrieb gemäß Anspruch 11 gelöst. Vorteilhafte Weiterbildungen der erfindungsgemäßen Lösung sind in den abhängigen Ansprüchen beschrieben.

Erfindungsgemäß ist ein Radantrieb zum Antreiben eines Rades eines Fahrzeugs geschaffen, mit einem elektrischen Antriebsmotor zum Erzeugen eines Antriebsmoments, einem Getriebe zum Erhöhen des Antriebsmoments und einer Gelenkwelle mit mindestens einem Gelenk zum Übertragen des erhöhten Antriebsmoments auf das Rad, bei dem der elektrische Antriebsmotor die Gelenkwelle teilweise, d.h. über einen Teil der Länge der Gelenkwelle erstreckend, umgebend gestaltet ist.

Gemäß der Erfindung sind der Antriebsmotor und die Gelenkwelle räumlich ineinander verschachtelt, insbesondere im Wesentlichen koaxial angeordnet. Insbesondere die leistungselektronischen Komponenten des Antriebsmotors sind die Gelenkwelle teilweise umgebend gestaltet, wodurch die so gebildete Anordnung von Gelenkwelle, Antriebsmotor und zugehöriger Leistungselektronik insgesamt kürzer und kompakter baut. Durch diese optimierte Raumnutzung werden ungenutzte Freiräume zwischen den einzelnen Bauteilen des erfindungsgemäßen Radantriebs weitgehend vermieden und es wird zusätzlicher Raum zwischen den Rädern einer Fahrzeugachse frei. Der freigewordene Raum ist vorteilhaft für die Anordnung weiterer Fahrzeugbauteile nutzbar, wie beispielsweise einem Energiespeicher.

Bei einer ersten vorteilhaften Weiterbildung des erfindungsgemäßen Radantriebs ist das Getriebe als Planetengetriebe gestaltet, das ein Hohlrad, ein Sonnenrad, einen Steg und mehreren Planetenräder umfasst.

Das als Planetengetriebe gestaltete Getriebe ist insbesondere an einem koaxial zur Gelenkwelle angeordneten Antriebsmotor drehfest angebracht. Das Planetengetriebe selbst ist mit koaxial angeordneten Elementen gestaltet, wodurch der im Wesentlichen koaxial aufgebaute Radantrieb mit diesem Getriebe besonders kompakt baut. Die einzelnen Bauelemente des Planetengetriebes können grundsätzlich jeweils den Antrieb oder Abtrieb bilden, oder festgehalten sein, wodurch verschiedene Übersetzungen realisierbar sind. Ferner erlaubt das Planetengetriebe hohe Drehmomente, eine Leistungsverzweigung bzw. Leistungssummierung und weist einen guten Wirkungsgrad auf.

Bei einer zweiten vorteilhaften Weiterbildung des erfindungsgemäßen Radantriebs ist am Sonnenrad des Planetengetriebes ein Innenzylinder ausgebildet der das Gelenk der Gelenkwelle umgebend gestaltet ist.

Der Innenzylinder ist bevorzugt im Wesentlichen als Hohlzylinder gestaltet und koaxial zur Gelenkwelle angeordnet. Ausgehend vom Sonnenrad ragt der Innenzylinder über das Gelenk der Gelenkwelle hinweg. Mittels der so gebildeten verschachtelten Anordnung der im Wesentlichen auf einer Achse angeordneten Bauteile des Radantriebs verkürzt sich dessen Längenabmessung vorteilhaft.

Bei einer dritten vorteilhaften Weiterbildung des erfindungsgemäßen Radantriebs weist der elektrische Antriebsmotor einen Abtrieb auf, der mit dem Sonnenrad des Planetengetriebes momentenübertragend verbunden ist.

Zum Übertragen des Antriebsmoments auf das Sonnenrad ist ein beweglicher Teil des elektrischen Antriebsmotors, insbesondere der Rotor, mit dem am Sonnenrad ausgebildeten Innenzylinder momentenübertragend verbunden. Die Drehmomentübertragung erfolgt dann vom Rotor auf den Innenzylinder und vom Innenzylinder auf das Sonnenrad des Planetengetriebes. Dazu ist der Innenzylinder zumindest teilweise vom Antriebsmotor umgeben und das Planetengetriebe ist vorteilhaft am elektrischen Antriebsmotor drehfest angebracht. Mit dem derart gestalteten erfindungsgemäßen Abtrieb ist eine baulich kompakte Kopplung von Antriebsmotor und Getriebe geschaffen. Vorteilhaft weist der Innenzylinder eine hohe Verwindungssteifigkeit auf, wodurch er zum Übertragen großer Drehmomente besonders geeignet ist.

Bei einer vierten vorteilhaften Weiterbildung des erfindungsgemäßen Radantriebs ist die Gelenkwelle mit dem Steg des Planetengetriebes momentenübertragend verbunden.

Mittels des Innenzylinders wird, wie oben erläutert, ein Eingangsdrehmoment auf das Sonnenrad übertragen. Das Sonnenrad überträgt dieses Drehmoment auf die Planetenräder und somit an den Steg, wodurch das Eingangsdrehmoment erhöht wird. Als feststehende Drehmomentstütze dient gemäß dieser Weiterbildung das Hohlrad. Die Gelenkwelle nimmt den vom Planetengetriebe erhöhten Antriebsmoment am Steg auf. Eine derartige Auslegung des Planetengetriebes, mit dem Sonnenrad als Eingang des Drehmoments und dem Steg als Ausgang des Drehmoments, ermöglicht eine maximale Übersetzung. Das derart gestaltete Planetengetriebe ist somit vorteilhaft zum Beschleunigen großer Massen geeignet.

Bei einer fünften vorteilhaften Weiterbildung des erfindungsgemäßen Radantriebs ist die Gelenkwelle mit dem Hohlrad des Planetengetriebes momentenübertragend verbunden.

Gemäß dieser Weiterbildung wird das am Sonnenrad eingespeiste Drehmoment mittels der Planetenräder auf das Hohlrad übertragen, wodurch das Eingangsdrehmoment erhöht wird. Der Planetensteg dient dabei als feststehende Drehmomentstütze. Die Gelenkwelle nimmt das vom Planetengetriebe erhöhte Antriebsmoment am Hohlrad auf. Diese Ausführungsform des Planetengetriebes kann als so genanntes Standgetriebe mit einer Drehrichtungsumkehr gestaltet sein.

Bei einer sechsten vorteilhaften Weiterbildung des erfindungsgemäßen Radantriebs umfasst der elektrische Antriebsmotor ein Außengehäuse und das Außengehäuse ist den elektrischen Antriebsmotor und das Getriebe umgreifend gestaltet.

Das den elektrischen Antriebsmotor umgebende Außengehäuse umgibt zugleich auch das Getriebe. Antriebsmotor und Getriebe sind also durch das Außengehäuse im Wesentlichen zu einem Bauteil zusammengefasst, wodurch eine ortsfeste Anbringung mit nur einer Halterung möglich ist. Ferner sind sämtliche beweglichen Teile von Antriebsmotor und Getriebe nach außen abgeschirmt, beispielsweise gegen Schmutz oder Spritzwasser. Eine derartige Ausgestaltung des Außengehäuses führt vorteilhaft zu Gewichtsersparnis und zu einer vereinfachten Montage.

Bei einer siebten vorteilhaften Weiterbildung des erfindungsgemäßen Radantriebs ragt die Gelenkwelle in das Außengehäuse.

Das Außengehäuse weist dazu insbesondere an einer Stirnseite eine Öffnung auf in die die Gelenkwelle ragt. Die so erfindungsgemäß gebildete, verschachtelte Anordnung weist vorteilhaft eine geringere Längsabmessung auf als die Summe der Längsabmessungen der einzelnen Bauteile. Ferner ist die Öffnung dabei so bemessen, dass Schwenkbewegungen der Gelenkwelle die durch die Freiheitsgrade des an der Gelenkwelle ausgebildeten Gelenks entstehen ungehindert möglich sind.

Bei einer achten vorteilhaften Weiterbildung des erfindungsgemäßen Radantriebs umfasst die Gelenkwelle eine Zwischenwelle an deren beiden Endbereichen jeweils ein Gelenk ausgebildet ist.

Die Gelenke sind insbesondere als Kreuzgelenke an den Enden der stabförmigen Zwischenwelle ausgebildet. Die zwischen den Gelenken angeordnete Zwischenwelle überträgt so ein Drehmoment auch bei nicht mehr fluchtenden Drehachsen, während die Welle um ihre Achse rotiert. Der Antrieb der Fahrzeugräder ist dadurch vorteilhaft auch während des Abfederns von Fahrbahnunebenheiten gewährleistet.

Bei einer neunten vorteilhaften Weiterbildung des erfindungsgemäßen Radantriebs ist der elektrische Antriebsmotor an dem Achsträger eines zugehörigen Fahrzeugs drehfest angebracht.

Im Betrieb des Fahrzeugs treten, wie bereits erläutert, durch Fahrbahnunebenheiten verursachte Stöße auf. Diese Stöße werden üblicherweise mittels einer zwischen Achsträger und Karosserie gekoppelten Fahrzeugfederung gedämpft, die sich bei einem Stoß elastisch verformt. Durch diese Verformung der Federung ändert sich der Abstand zwischen Achsträger und Karosserie. Die Änderung des Abstands der Fahrzeugteile relativ zueinander ist in der Regel bei der Konstruktion zu berücksichtigen. Gemäß dieser Weiterbildung ist der elektrische Antriebsmotor am Achsträger angebracht, wodurch eine Relativbewegung von Antriebsmotor und Gelenkwelle zueinander vermieden wird und der erfindungsgemäße Radantrieb kleiner baubar ist. Alternativ dazu ist der elektrische Antriebsmotor auch an der Karosserie drehfest anbringbar, was einen Zugang zum Antriebsmotor zu Wartungszwecken erleichtert.

Ferner ist die Aufgabe mit einem Fahrzeug mit mindestens einem solchen Radantrieb gelöst. Der durch Einbau eines oder mehrere erfindungsgemäßer Radantriebe gewonnene zusätzliche Bauraum zwischen den Rädern einer Achse ist vorteilhaft für das Anbringen von weiteren Fahrzeugbauteilen, wie etwa eines Energiespeichers, nutzbar.

Nachfolgend werden Ausführungsbeispiele der erfindungsgemäßen Lösung anhand der beigefügten schematischen Zeichnungen näher erläutert. Es zeigt:
- Fig. 1: einen Längsschnitt durch ein Ausführungsbeispiel eines erfindungsgemäßen Radantriebs und
- Fig. 2: eine Ansicht gemäß Fig. 1, bei der der Steg des Planetengetriebes als Drehmomentstütze dient.

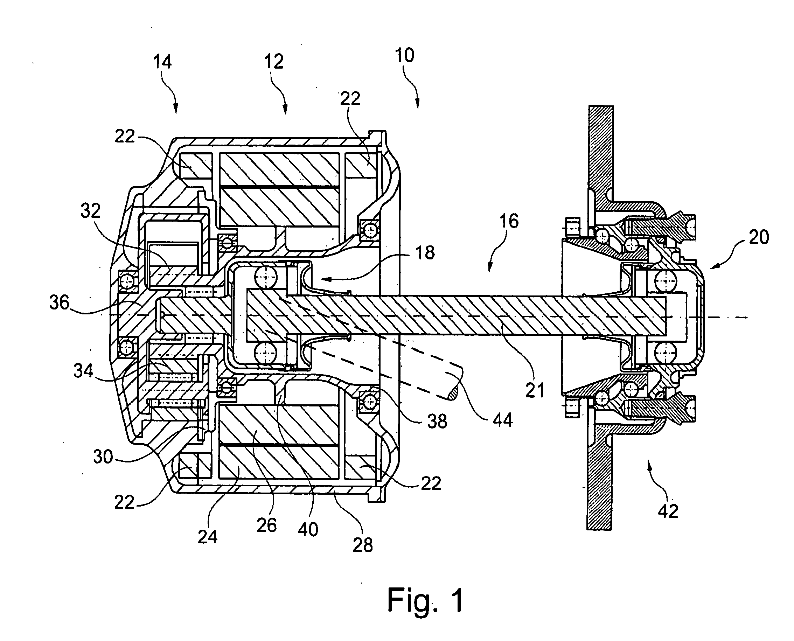

In Fig. 1 ist ein Längsschnitt durch einen erfindungsgemäßen Radantrieb 10 dargestellt. Der Radantrieb 10 umfasst einen elektrischen Antriebsmotor 12, ein Getriebe 14, eine Gelenkwelle 16 mit zwei Gelenken 18 und 20 und eine zwischen den beiden Gelenken 18 und 20 angeordnete Zwischenwelle 21.

Der elektrische Antriebsmotor 12 umfasst mehrere Erregerwicklungen 22, einen Stator 24, einen Rotor 26 und ein, den elektrische Antriebsmotor 12 nach außen begrenzendes Außengehäuse 28. An einer Stirnseite des elektrischen Antriebsmotors 12 ist ein Innengehäuse 30 ausgebildet, das den Antriebsmotor 12 weitgehend von dem an dem Innengehäuse 30 drehfest angebrachten Getriebe 14 trennt.

Das Getriebe 14 ist vorliegend als Planetengetriebe mit einem im mittleren Bereich angeordneten Sonnenrad 32, mehreren das Sonnenrad 32 umgebenden Planetenräder 34, sowie einem Hohlrad gebildet. Das Sonnenrad 32, die Planetenräder 34 und das Hohlrad sind zum Übertragen einer Drehbewegung als Zahnräder gestaltet. Das Hohlrad dient in diesem Ausführungsbeispiel als Drehmomentstütze und ist mit dem Außengehäuse 28 einstückig zusammengefasst. Das Außengehäuse 28 umgibt den elektrischen Antriebsmotor 12 und das Getriebe 14 und grenzt diese nach außen ab. Die Planetenräder werden von einem Steg 36 getragen. Der Steg 36 dient in diesem Ausführungsbeispiel zum Übertragen des erhöhten Drehmoments auf die Gelenkwelle 16. Der Steg 36 ist dazu mittels einer Presspassung (Mitnahmeverzahnung) mit dem Gelenk 18 drehfest verbunden.

Das Gelenk 18 ist mit einem Teil der Zwischenwelle 21 innerhalb eines am Sonnenrad 32 ausgebildeten Innenzylinders 38 angeordnet. Der Innenzylinder 38 ist dabei im Wesentlichen hohlzylindrisch gestaltet und ragt ausgehend vom Sonnenrad 32 durch das Innengehäuse 30 in den elektrischen Antriebsmotor 12, in dem der Innenzylinder 38 drehbar gelagert ist. Der Innenzylinder 38 weist eine äußere Mantelfläche auf, an deren mittlerem Bereich ein radial umlaufender Kranz 40 ausgebildet ist. An dem Kranz 40 ist der Rotor 26 des elektrischen Antriebsmotors 12 momentenübertragend angebracht.

Werden die Erregerwicklungen 22 des elektrischen Antriebsmotors 12 von elektrischem Strom durchflossen, entsteht in an sich bekannter Weise ein Magnetfeld. In diesem Magnetfeld beginnt sich der Rotor 26 zu drehen. Die Drehbewegung des Rotors 26 versetzt den Kranz 40 und den Innenzylinder 38 in eine Drehbewegung, wodurch auch das Sonnenrad 32 gedreht wird. Durch die Drehbewegung des Sonnenrades 32 werden die mit dem Sonnenrad 32 verzahnten Planetenräder 34 gedreht und die Planetenräder 34 drehen den Steg 36 um das Sonnenrad 32.

Das am Steg 36 angebrachte Gelenk 18 nimmt das vom Getriebe 14 erhöhte Drehmoment auf und überträgt es mittels der Zwischenwelle 21 und des Gelenks 20 an eine Radnabe 42.

Das Bezugszeichen 44 zeigt die geschnittene Zwischenwelle 21, wie sie durch eine Fahrbahnunebenheit im Betrieb des Fahrzeugs geschwenkt wurde. Durch den in Richtung der Radnabe 42 an einer Stirnseite geöffneten Innenzylinder 38 ist trotz der erfindungsgemäßen kompakten Bauweise des Radantriebs eine derartige Bewegung ohne Einschränkung möglich.

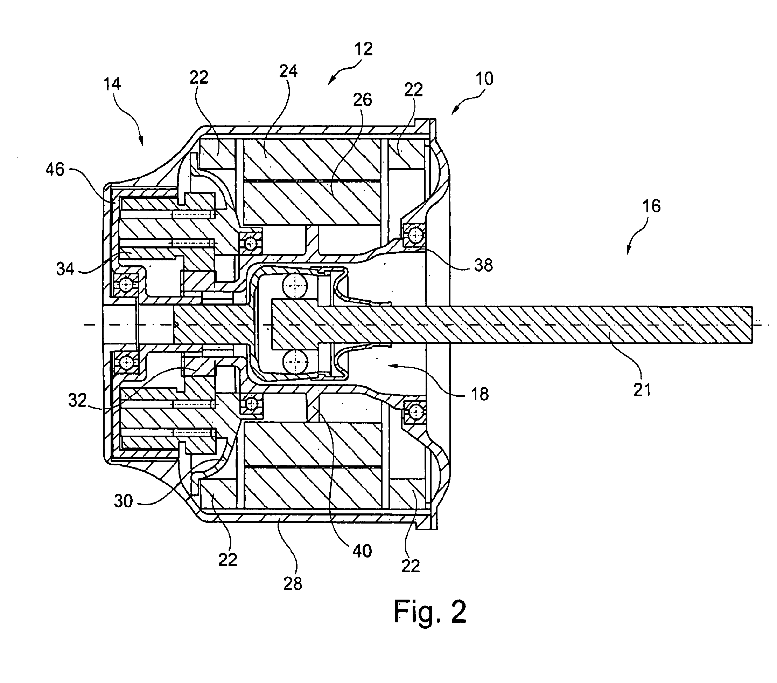

Fig. 2 zeigt einen Längsschnitt durch einen erfindungsgemäßen Radantrieb 10, bei dem die Planetenräder 34 ortsfest an dem Innengehäuse 30 gehalten sind. Dazu ist der Steg bzw. der Planetenträger am Innengehäuse 30 ausgebildet. Das Hohlrad 46 läuft in diesem Ausführungsbeispiel innerhalb des Außengehäuses 28 um das angetriebene Sonnenrad 32. Zum Übertragen eines Drehmoments ist das Gelenk 18 mittels einer Presspassung am Hohlrad 46 momentenübertragend angebracht, wodurch der durch das Getriebe 14 erhöhte Antriebsmoment mittels der Gelenkwelle 16 auf die (hier nicht dargestellte) Radnabe übertragen wird.

Durch das Anbringen der Gelenkwelle 16 am Steg 36 oder am Hohlrad 46 sind bei einem Drehmomenteingang bzw. einer Drehmomenteinkopplung am Sonnenrad 32 unterschiedliche Übersetzungen realisierbar. Die größte Übersetzung ist bei einem Drehmomenteingang am Sonnenrad 32 und Drehmomentausgang am Steg 36, sowie drehfestem Hohlrad möglich. Hier liegt die Übersetzung i je nach Zähnezahlverhältnis der Zahnräder bei 2,5 ≤ i ≤ 5.

Bei Einkopplung des Drehmoments am Sonnenrad 32 und Drehmomentausgang am Hohlrad 46 sowie ortsfestem Steg liegt ein so genanntes Standgetriebe vor. Die Übersetzung i liegt hier bei -4 ≤ i ≤ -1,5. Ferner ist hier die Drehrichtung des Getriebes 14 umgekehrt. Um Übersetzungen bis i=10 zu realisieren, kann ein zweistufiger Planet vorgesehen sein, wie in Fig. 2 abgebildet.

### Bezugszeichenliste

- 10: Radantrieb
- 12: elektrischer Antriebsmotor
- 14: Getriebe
- 16: Gelenkwelle
- 18: Gelenk
- 20: Gelenk
- 21: Zwischenwelle
- 22: Erregerwicklung
- 24: Stator
- 26: Rotor
- 28: Außengehäuse
- 30: Innengehäuse
- 32: Sonnenrad
- 34: Planetenrad
- 36: Steg
- 38: Innenzylinder
- 40: Kranz
- 42: Radnabe
- 44: Pfeil
- 46: Hohlrad

## Patentansprüche

1. Radantrieb (10) zum Antreiben eines Rades eines Fahrzeugs, mit einem elektrischen Antriebsmotor (12) zum Erzeugen eines Antriebsmoments, einem Getriebe (14) zum Erhöhen des Antriebsmoments und einer Gelenkwelle (16) mit mindestens einem Gelenk (18) zum Übertragen des erhöhten Antriebsmoments auf das Rad,
**dadurch gekennzeichnet, dass** der elektrische Antriebsmotor (12) die Gelenkwelle (16) teilweise umgebend gestaltet ist.

2. Radantrieb nach Anspruch 1,
**dadurch gekennzeichnet, dass** das Getriebe (14) als Planetengetriebe gestaltet ist, welches ein Hohlrad (28, 46), ein Sonnenrad (32), einen Steg (36) und mehreren Planetenräder (34) umfasst.

3. Radantrieb nach Anspruch 2,
**dadurch gekennzeichnet, dass** am Sonnenrad (32) des Planetengetriebes ein Innenzylinder (38) ausgebildet ist der das Gelenk (18) umgebend gestaltet ist.

4. Radantrieb nach einem der Ansprüche 2 bis 3,
**dadurch gekennzeichnet, dass** der elektrische Antriebsmotor (12) einen Abtrieb aufweist der mit dem Sonnenrad (32) des Planetengetriebes momentenübertragend verbunden ist.

5. Radantrieb nach einem der Ansprüche 2 bis 4,
**dadurch gekennzeichnet, dass** die Gelenkwelle (16) mit dem Steg (36) des Planetengetriebes momentenübertragend verbunden ist.

6. Radantrieb nach einem der Ansprüche 2 bis 5,
**dadurch gekennzeichnet, dass** die Gelenkwelle (16) mit dem Hohlrad (46) des Planetengetriebes momentenübertragend verbunden ist.

7. Radantrieb nach einem der Ansprüche 1 bis 6,
**dadurch gekennzeichnet, dass** der elektrische Antriebsmotor ein Außengehäuse (28) umfasst und das Außengehäuse (28) den elektrischen Antriebsmotor (12) und das Getriebe (14) umgreifend gestaltet ist.

8. Radantrieb nach Anspruch 7,
**dadurch gekennzeichnet, dass** die Gelenkwelle (16) in das Außengehäuse (28) ragt.

9. Radantrieb nach einem der Ansprüche 1 bis 8,
**dadurch gekennzeichnet dass** die Gelenkwelle (16) eine stabförmige Zwischenwelle (21) umfasst an deren beiden Enden jeweils ein Gelenk (18, 20) ausgebildet ist.

10. Radantrieb nach einem der Ansprüche 1 bis 9,
**dadurch gekennzeichnet, dass** der elektrische Antriebsmotor (12) an dem Achsträger eines zugehörigen Fahrzeugs drehfest angebracht ist.

11. Fahrzeug mit mindestens einem Radantrieb (10) nach einem der Ansprüche 1 bis 10.

## Claims

1. A wheel drive (10) for driving a wheel of a vehicle, with an electric drive motor (12) for producing a drive torque, a gearing (14) to increase the drive torque and an articulated shaft (16) with at least one joint (18) to transmit the increased drive torque to the wheel, **characterised in that** the electric drive motor (12) is formed partially surrounding the articulated shaft (16).

2. A wheel drive according to claim 1, **characterised in that** the gearing (14) is configured as a planetary gearing, which comprises an internal gear (28, 46), a sun gear (32), a web (36) and a plurality of planetary gears (34).

3. A wheel drive according to claim 2, **characterised in that** an inner cylinder (38), which is formed surrounding the joint (18), is configured on the sun gear (32) of the planetary gearing.

4. A wheel drive according to either of claims 2 or 3, **characterised in that** the electric drive motor (12) has an output that is connected to the sun gear (32) of the planetary gearing in a torque-transmitting manner.

5. A wheel drive according to any one of claims 2 to 4, **characterised in that** the articulated shaft (16) is connected to the web (36) of the planetary gearing in a torque-transmitting manner.

6. A wheel drive according to any one of claims 2 to 5, **characterised in that** the articulated shaft (16) is connected to the internal gear (46) of the planetary gearing in a torque-transmitting manner.

7. A wheel drive according to any one of claims 1 to 6, **characterised in that** the electric drive motor comprises an outer housing (28) and the outer housing (28) is formed encompassing the electric drive motor (12) and the gearing (14).

8. A wheel drive according to claim 7, **characterised in that** the articulated shaft (16) projects into the outer housing (28).

9. A wheel drive according to any one of claims 1 to 8, **characterised in that** the articulated shaft (16) comprises a rod-shaped intermediate shaft (21), at the two ends of which a joint (18, 20) is configured in each case.

10. A wheel drive according to any one of claims 1 to 9, **characterised in that** the electric drive motor (12) is non-rotatably attached to the axle carrier of an associated vehicle.

11. A vehicle with at least one wheel drive (10) according to any one of claims 1 to 10.

## Revendications

1. Entrainement de roue (10) pour permettre d'entrainer une roue d'un véhicule comportant un moteur d'entrainement électrique (12) permettant de produire un couple d'entrainement, une transmission (14) permettant d'augmenter le couple d'entrainement et un arbre de transmission articulé (16) comportant au moins une articulation (18) permettant de transmettre le couple d'entrainement augmenté à la roue,
**caractérisé en ce que**
le moteur d'entrainement électrique (12) est réalisé de façon à entourer partiellement l'arbre articulé ou l'arbre de transmission articulé (16).

2. Entrainement de roue conforme à la revendication 1,
**caractérisé en ce que**
la transmission (14) est réalisée sous la forme d'une transmission planétaire qui comporte une couronne de train planétaire (28, 46), une roue solaire (32), une entretoise (36) et plusieurs roues planétaires (34).

3. Entrainement de roue conforme à la revendication 2,
**caractérisé en ce que**
sur la roue solaire (32) de la transmission planétaire est formé un cylindre interne (38) qui entoure l'articulation (18).

4. Entrainement de roue conforme à l'une des revendications 2 et 3,
**caractérisé en ce que**
le moteur d'entrainement électrique (12) comporte une sortie qui est reliée de façon à permettre la transmission des couples à la roue solaire (32) de la transmission planétaire.

5. Entrainement de roue conforme à l'une des revendications 2 à 4,
**caractérisé en ce que**
l'arbre de transmission articulé (16) est relié de façon à permettre la transmission des couples à l'entretoise (36) de l'entrainement planétaire.

6. Entrainement de roue conforme à l'une des revendications 2 à 5,
**caractérisé en ce que**
l'arbre de transmission articulé (16) est relié de façon à permettre la transmission des couples à la couronne de train planétaire (46) de la transmission planétaire.

7. Entrainement de roue conforme à l'une des revendications 1 à 6,
**caractérisé en ce que**
le moteur d'entrainement électrique comporte un boitier externe (28), ce boitier externe (28) est réalisé pour envelopper le moteur d'entrainement électrique (12) et la transmission (14).

8. Entrainement de roue conforme à la revendication 7,
**caractérisé en ce que**
l'arbre de transmission articulé (16) pénètre dans le boitier externe (28).

9. Entrainement de roue conforme à l'une des revendications 1 à 8,
**caractérisé en ce que**
l'arbre de transmission articulé (16) comporte un arbre intermédiaire (21) en forme de barre aux deux extrémités duquel est respectivement formée une articulation (18, 20).

10. Entrainement de roue conforme à l'une des revendications 1 à 9,
**caractérisé en ce que**
le moteur d'entrainement électrique (12) est monté solidairement en rotation sur le support d'essieu d'un véhicule associé.

11. Véhicule comportant au moins un entrainement de roue (10) conforme à l'une des revendications 1 à 10.
